# EUROPEAN PATENT APPLICATION

(11) **EP 4 742 277 A1**
(43) Date of publication of application: **13.05.2026**
(21) Application number: 24844802.9
(22) Date of filing: 24.07.2024
(51) Int. Cl.: H01B 5/14

(54) **CONDUCTIVE CONNECTING MEMBER, RADIO FREQUENCY ASSEMBLY, BASE STATION ANTENNA, AND BASE STATION**

(30) Priority: 25.07.2023 CN 202310922890
(71) Applicant: Huawei Technologies Co., Ltd., Shenzhen, Guangdong 518129 (CN)
(72) Inventor: ZHOU, Lifan, Shenzhen, Guangdong 518129 (CN); ZHAO, Chongjun, Shenzhen, Guangdong 518129 (CN); WANG, He, Shenzhen, Guangdong 518129 (CN); ZHANG, Hongzhi, Shenzhen, Guangdong 518129 (CN); LIU, Junjie, Shenzhen, Guangdong 518129 (CN); LI, Zhiyong, Shenzhen, Guangdong 518129 (CN)
(74) Representative: Isarpatent
(86) International application number: PCT/CN2024/107267
(87) International publication number: WO 2025/021111

(57) **Abstract**

This application provides a conductive connector, a radio frequency component, a base station antenna, and a base station. The conductive connector includes a substrate and a film layer structure, where the substrate is an elastic polymer; and the film layer structure includes a flexible substrate layer and at least one metal plating layer, where the flexible substrate layer wraps a surface of the substrate, the at least one metal plating layer is sequentially stacked on a side of the flexible substrate layer away from the substrate, the at least one metal plating layer includes a silver plating layer, and the silver plating layer is located on a surface of the film layer structure away from the substrate. The conductive connector can provide a reliable electrical connection at a metal connection position of the radio frequency component, and also has good passive intermodulation performance.

## Description

### CROSS-REFERENCE TO RELATED APPLICATIONS

This application claims priority to Chinese Patent Application No. 202310922890.0, filed with the China National Intellectual Property Administration on July 25, 2023 and entitled "CONDUCTIVE CONNECTOR, RADIO FREQUENCY COMPONENT, BASE STATION ANTENNA, AND BASE STATION", which is incorporated herein by reference in its entirety.

### TECHNICAL FIELD

This application relates to the field of antenna technologies, and in particular, to a conductive connector, a radio frequency component, a base station antenna, and a base station.

### BACKGROUND

With development of the mobile communication industry, a requirement for integration of a base station antenna is increasingly high, and a requirement for performance of the base station antenna is also increasingly high.

A base station antenna product has many metal connection positions to implement an electrical connection, and currently there are two manners: a hard connection and a soft connection. The hard connection refers to screw fastening or various welding processes, and has a high requirement on tolerance matching between components and have problems such as difficult disassembly. The soft connection includes a spring connection and a conductive adhesive connection, and has a problem of poor passive intermodulation (passive intermodulation, PIM) performance.

### SUMMARY

Embodiments of this application provide a conductive connector, a radio frequency component, a base station antenna, and a base station, to improve performance of the base station antenna.

According to a first aspect, an embodiment of this application provides a conductive connector, where the conductive connector may be used in metal connection positions of a base station antenna and another radio frequency component, to implement an electrical connection. The conductive connector includes a substrate and a film layer structure. The substrate is an elastic polymer, and provides good compressibility and elasticity for the conductive connector, so that the conductive connector can adapt to different application space. The substrate also has low water absorption and high temperature resistance, so as to improve weather resistance of the conductive connector. The film layer structure includes a flexible substrate layer and at least one metal plating layer. The flexible substrate layer wraps a surface of the substrate, and the at least one metal plating layer is sequentially stacked on a side of the flexible substrate layer away from the substrate. The flexible substrate layer can ensure that the film layer structure can be deformed with compression of the substrate, and the metal plating layer can be connected between two metal conductors to ensure a good and reliable electrical connection. The at least one metal plating layer includes a silver plating layer, and the silver plating layer is located on a surface of the film layer structure away from the substrate. The silver plating layer is a surface plating layer of the film layer structure, which can improve conductivity and weather resistance of the conductive connector. The conductive connector provided in this embodiment of this application is disposed between two metal conductors that are fastened to during application, and the two metal conductors may be in contact with the film layer structure to implement a reliable electrical connection. The conductive connector can be fastened by pressing the two metal conductors, so that the conductive connector does not need to be disposed with conductive adhesive used to connect the metal conductors, thereby preventing the conductive adhesive from adversely affecting passive intermodulation performance of the base station antenna.

When there is one metal plating layer, the metal plating layer is a silver plating layer. When there are two or more metal plating layers, the at least one metal plating layer includes a bottom plating layer, and the bottom plating layer may be specifically located on a surface of the film layer structure facing the substrate. There is a good bonding force between the bottom plating layer and the flexible substrate layer, so that the bottom plating layer is not easily peeled off from the flexible substrate layer.

In some possible implementations, the bottom plating layer is a copper plating layer. To protect the copper plating layer, the copper plating layer is processed with a passivation solution. The passivation solution herein may be a heterocyclic passivation solution, for example, benzotriazole (benzotriazole, BTA).

When there are three or more metal plating layers, the at least one metal plating layer includes an intermediate plating layer located between the bottom plating layer and the silver plating layer. Conductivity of the film layer structure is further improved by combining a plurality of metal plating layers. The intermediate plating layer may include at least one of a copper plating layer, a nickel plating layer, and a titanium plating layer.

In some possible implementations, the substrate includes at least one of silicone rubber, epichloro-hydrin rubber, ethylene propylene rubber, butyl rubber, styrene rubber, silicone foam, polyurethane foam, and acrylic foam. The substrate has low water absorption, high temperature resistance, and high resilience. When the substrate is used in the base station antenna, passive intermodulation performance of the base station antenna can be improved. When the substrate is conductive, the substrate may be doped with conductive particles such as silver, aluminum, nickel, and carbon. Alternatively, the substrate is an organic conductive polymer, for example, 3,4-ethylenedioxythiophene (3,4-ethylenedioxythiophene, PEDOT).

In some possible implementations, a material of the flexible substrate layer includes any one of polyimide (polyimide, PI), polyethylene glycol terephthalate (polyethylene glycol terephthalate, PET), and a liquid crystal polymer (liquid crystal polymer, LCP). The flexible substrate layer may be bonded to the surface of the substrate through a bonding layer, so that the film layer structure can wrap the surface of the substrate, and structural stability and electrical connection reliability of the conductive connector can be provided, thereby improving passive intermodulation performance of the base station antenna. The bonding layer includes at least one of high-temperature-resistant silicone adhesive, polyimide adhesive, and phenolic resin adhesive.

In some possible implementations, the film layer structure has a first side edge and a second side edge along a direction in which the film layer structure wraps the substrate. There is a seam between the first side edge and the second side edge, which reserves specific error space for edge abutting of the film layer structure. The first side edge and the second side edge may be located in a same plane. When the conductive connector is configured to connect two metal conductors, the two metal conductors may be respectively in contact with two sides of a thickness direction of the conductive connector. The seam is located on one side of the thickness direction of the conductive connector, which does not affect an electrical connection implemented by the metal conductor through the film layer structure.

According to a second aspect, an embodiment of this application provides a radio frequency component, where the radio frequency component includes a first conductor, a second conductor, and at least one conductive connector provided in the first aspect. The first conductor and the second conductor are disposed at an interval, the conductive connector is disposed between the first conductor and the second conductor, the first conductor and the second conductor are fastened to and squeeze the conductive connector, and at least one of the first conductor and the second conductor is electrically connected to at least one metal plating layer of the conductive connector. Because the conductive connector is fastened by pressing the first conductor and the second conductor, without using conductive adhesive, passive intermodulation performance of the radio frequency component can be improved. The conductive connector is fastened by pressing the first conductor and the second conductor, which facilitates assembly and disassembly of the first conductor and the second conductor, thereby improving design flexibility of the radio frequency component, and reducing a component tolerance requirement.

According to a third aspect, an embodiment of this application provides a base station antenna, including a reflection plate, a phase shifter cavity, and the conductive connector provided in the first aspect. The reflection plate and the phase shifter cavity are disposed at an interval, the conductive connector is disposed between the reflection plate and the phase shifter cavity, the reflection plate and the phase shifter cavity are fastened to and squeeze the conductive connector, and the reflection plate is electrically connected to at least one metal plating layer of the conductive connector. The phase shifter cavity includes a ground connection for grounding, and at least a part of the ground connection is electrically connected to the at least one metal plating layer of the conductive connector. Because the conductive connector is fastened by pressing the reflection plate and the phase shifter cavity, without using conductive adhesive, passive intermodulation performance of the base station antenna can be improved. The conductive connector is fastened by pressing the reflection plate and the phase shifter cavity, which facilitates assembly and disassembly of the reflection plate and the phase shifter cavity, thereby improving design flexibility of the ground connection of the phase shifter cavity, and reducing a component tolerance requirement.

In some possible implementations, the conductive connector is in a long strip shape, and a length direction of the conductive connector is parallel to a length direction of the reflection plate, so as to implement continuous grounding between the ground connection of the phase shifter cavity and the reflection plate.

In some possible implementations, there are a plurality of conductive connectors, and the plurality of conductive connectors are arranged along the length direction of the reflection plate, so as to implement segment-by-segment grounding between the ground connection of the phase shifter cavity and the reflection plate.

According to a fourth aspect, an embodiment of this application provides a base station antenna, where the base station antenna includes an inner conductor, a first outer conductor, a second outer conductor, and the conductive connector provided in the first aspect. The first outer conductor and the second outer conductor are separately disposed around the inner conductor, the first outer conductor and the second outer conductor are disposed at an interval, and the conductive connector is disposed between the first outer conductor and the second outer conductor. The first outer conductor and the second outer conductor are fastened to and squeeze the conductive connector, and the first outer conductor and the second outer conductor are separately electrically connected to at least one metal plating layer of the conductive connector. Because the conductive connector is fastened by pressing the first outer conductor and the second outer conductor, without using conductive adhesive, passive intermodulation performance of the base station antenna can be improved. The conductive connector is fastened by pressing the first outer conductor and the second outer conductor, which facilitates assembly and disassembly of the first outer conductor and the second outer conductor, thereby improving design flexibility of the outer conductor, and reducing a component tolerance requirement.

In some possible implementations, the conductive connector is in a ring shape, and the conductive connector surrounds the inner conductor.

According to a fifth aspect, an embodiment of this application provides a base station antenna, where the base station antenna includes a metal plate, at least two feed lines, a dielectric layer, and the conductive connector provided in the first aspect. Both the at least two feed lines and the conductive connector are disposed between the metal plate and the dielectric layer, one conductive connector is disposed between at least two adjacent feed lines, the metal plate and the dielectric layer are fastened to and squeeze the conductive connector, and at least one of the metal plate and the dielectric layer is electrically connected to at least one metal plating layer of the conductive connector. Because the conductive connector is fastened by pressing the metal plate and the dielectric layer, without using conductive adhesive, passive intermodulation performance of the base station antenna can be improved. The conductive connector is fastened by pressing the metal plate and the dielectric layer, which can increase a shielding and isolation design method of the base station antenna, and reduce a component tolerance requirement.

According to a sixth aspect, an embodiment of this application provides a base station, where the base station includes a pole, a baseband processing unit, and the base station antenna provided in the third aspect, the fourth aspect, or the fifth aspect. The base station antenna is fastened to the pole, and the base station antenna is electrically connected to the baseband processing unit.

### BRIEF DESCRIPTION OF DRAWINGS

FIG. 1 is a diagram of a principle of a base station according to an embodiment of this application;
FIG. 2 is a diagram of a structure of a base station according to an embodiment of this application;
FIG. 3 is a diagram of a structure of a conductive connector according to an embodiment of this application;
FIG. 4 is a diagram of an application scenario of a conductive connector according to an embodiment of this application;
FIG. 5a is a diagram of a partial cross-sectional structure of a conductive connector according to an embodiment of this application;
FIG. 5b is a diagram of a partial cross-sectional structure of a conductive connector according to an embodiment of this application;
FIG. 5c is a diagram of a partial cross-sectional structure of a conductive connector according to an embodiment of this application;
FIG. 6a is a diagram of a structure of a conductive connector according to an embodiment of this application;
FIG. 6b is a diagram of a cross-sectional structure of a conductive connector according to an embodiment of this application;
FIG. 6c is a diagram of a structure of a conductive connector according to an embodiment of this application;
FIG. 7 is a diagram of an application scenario of a conductive connector according to an embodiment of this application;
FIG. 8 is a diagram of a structure of a base station antenna according to an embodiment of this application;
FIG. 9a is a diagram of a partial structure of a base station antenna according to an embodiment of this application;
FIG. 9b is a top view of a partial structure of a base station antenna according to an embodiment of this application;
FIG. 9c is a diagram of a partial structure of a base station antenna according to an embodiment of this application;
FIG. 9d is a top view of a partial structure of a base station antenna according to an embodiment of this application;
FIG. 10a is a diagram of a partial structure of a base station antenna according to an embodiment of this application;
FIG. 10b is a diagram of a cross-sectional structure at P-P in FIG. 10a;
FIG. 11a is a diagram of a structure of a conductive connector according to an embodiment of this application;
FIG. 11b is a diagram of a structure of a conductive connector according to an embodiment of this application;
FIG. 11c is a diagram of a structure of a conductive connector according to an embodiment of this application;
FIG. 12 is a diagram of a structure in which a plurality of conductive connectors are distributed around an inner conductor according to an embodiment of this application;
FIG. 13a is a diagram of a partial structure of a base station antenna according to an embodiment of this application;
FIG. 13b is a diagram of a cross-sectional structure at R-R in FIG. 13a; and
FIG. 13c is a top view of a partial structure of a base station antenna according to an embodiment of this application.

### DESCRIPTION OF EMBODIMENTS

With development of mobile communication, usage of a mobile terminal is increasingly high, and network coverage of a mobile cellular network is a key to mobile communication. A key device of the mobile cellular network is a base station antenna. To meet a requirement of mobile communication, the base station antenna is developing toward integration, so that the base station antenna has a lower weight, a smaller size, higher power, more frequency bands, and the like. In a process of integrating a plurality of components of the base station antenna, challenges such as tolerance matching between sizes of different components and electrical connection reliability are increasingly great. Currently, most metal connection positions in the base station antenna may implement an electrical connection by using a hard connection or a soft connection. The hard connection has disadvantages such as a high tolerance matching requirement and difficult disassembly, and the soft connection has a problem of poor passive intermodulation performance.

Based on this, embodiments of this application provide a conductive connector, a radio frequency component, a base station antenna, and a base station. The conductive connector can be used in the base station antenna to implement a reliable flexible electrical connection at low cost, and has good passive intermodulation performance, thereby meeting a high integration requirement of the base station antenna.

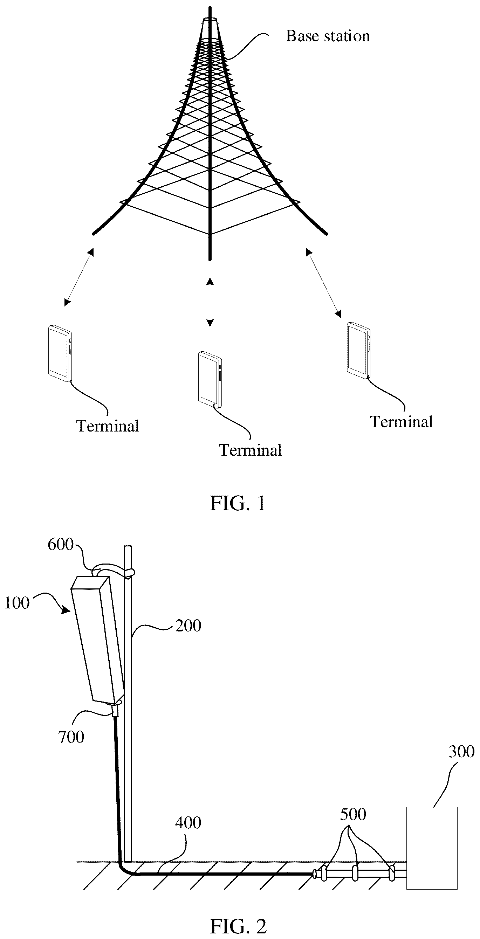

FIG. 1 is an example diagram of a system architecture to which an embodiment of this application is applicable. As shown in FIG. 1, the system architecture may include a base station and a terminal. Wireless communication may be implemented between the base station and the terminal. The base station may also be referred to as an access network device, may be located in a base station subsystem (base station subsystem, BBS), a UMTS terrestrial radio access network (UMTS terrestrial radio access network, UTRAN), or an evolved UMTS terrestrial radio access network (evolved universal terrestrial radio access network, E-UTRAN), and is configured to perform cell coverage of a signal to implement communication between a terminal device and a wireless network. UMTS is short for universal mobile telecommunication system (universal mobile telecommunication system).

Specifically, the base station may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in a long term evolution (long term evolution, LTE) system, or may be a radio controller in a cloud radio access network (cloud radio access network, CRAN) scenario. Alternatively, the base station may be a relay station, an access point, a vehicle-mounted device, a wearable device, a gNodeB (gNodeB or gNB) in a new radio (new radio, NR) system, an access network device in a future evolved network, or the like. This is not limited in embodiments of this application.

The base station is equipped with an antenna to implement signal transmission in space. FIG. 2 is a diagram of an application scenario of the antenna with which the base station is equipped shown in FIG. 1. FIG. 2 shows structures such as a pole 200 and a base station antenna 100. In this way, an antenna system can be protected from being affected by an external environment. The pole 200 is fastened to the ground and is at a specific height from the ground. The base station antenna 100 is fastened to the pole 200, so that a radiation distance requirement of the antenna can be met. The base station antenna 100 is specifically detachably fastened to the pole 200 through an adjustment bracket 600, so that the base station antenna 100 receives or transmits a signal. Along a height direction perpendicular to the pole 200, an orientation of the base station antenna 100 may be adjusted through the adjustment bracket 600. The base station may further include a radio frequency processing unit 700 and a baseband processing unit 300. The baseband processing unit 300 may be connected to the base station antenna 100 through the radio frequency processing unit 700. In some examples, the radio frequency processing unit 700 may also be referred to as a remote radio unit (remote radio unit, RRU), and the baseband processing unit 300 may also be referred to as a baseband unit (baseband unit, BBU). The radio frequency processing unit 700 may be integrated with the base station antenna 100, and the baseband processing unit 300 is located at a remote end of the base station antenna 100. In this case, the radio frequency processing unit 700 and the base station antenna 100 may be collectively referred to as an active antenna unit (active antenna unit, AAU). It should be noted that FIG. 2 merely shows an example of a position relationship between the radio frequency processing unit 700 and the base station antenna 100. In some other embodiments, both the radio frequency processing unit 700 and the baseband processing unit 300 may be located at a remote end of the base station antenna 100. The radio frequency processing unit 700 and the baseband processing unit 300 may be connected through a connecting wire 400. A grounding apparatus 500 is disposed between the baseband processing unit 300 and the connecting wire 400, and the grounding apparatus 500 usually includes a grounding electrode buried underground.

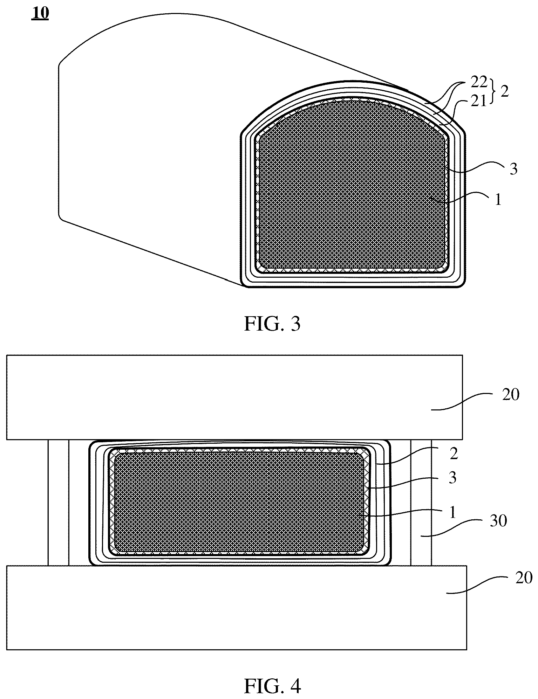

In the base station antenna 100 provided in embodiments of this application, metal connection positions between different components may be connected through a conductive connector 10 shown in FIG. 3. As shown in FIG. 3, the conductive connector 10 includes a substrate 1 and a film layer structure 2.

The conductive connector 10 may be disposed between two metal conductors during application and fastened by pressing the two metal conductors. To make the conductive connector 10 have good elasticity and compressibility, the substrate 1 uses an elastic polymer. The substrate 1 may be specifically silicone rubber, for example, dimethyl silicone rubber, methyl vinyl silicone rubber, nitrile silicone rubber, or ethyl silicone rubber. The substrate 1 may alternatively be epichloro-hydrin rubber, ethylene propylene rubber, butyl rubber, styrene rubber, silicone foam, polyurethane foam, acrylic foam, or the like. The substrate 1 is an elastic polymer, and compressibility of the substrate 1 may reach 10% to 60%. The compressibility is specifically related to a material, a shape, and an application environment of the substrate 1. In embodiments of this application, the substrate 1 may be used for a long time in an environment of -40°C to 120°C and maintain good elasticity and low water absorption. Specifically, the water absorption of the substrate 1 may be lower than 5%, to ensure that the substrate 1 maintains good performance. It can be learned that the substrate 1 in embodiments of this application has low water absorption, high temperature resistance, and high resilience. When the substrate 1 is used in the base station antenna 100, passive intermodulation performance of the base station antenna 100 can be improved.

The substrate 1 may make the conductive connector 10 maintain good elasticity, and may change a shape of the conductive connector 10 in different application environments to adapt to different space. When the conductive connector 10 is squeezed between two metal conductors, a direction in which one metal conductor points to the other metal conductor may be considered as a thickness direction of the conductive connector 10. A cross-sectional shape of the substrate 1 is not limited, for example, cylindrical, rectangular, and special-shaped structures. According to a rough structure size of the base station antenna 100, a size of the substrate 1 along the thickness direction of the conductive connector 10 may be selected from 0.5 mm to 10 mm. For example, a thickness of the substrate 1 may be 0.5 mm, 0.56 mm, 1 mm, 5 mm, 6.6 mm, 8 mm, or 10 mm.

The film layer structure 2 wraps a surface of the substrate 1, and the film layer structure 2 is at least partially or completely a conductor. The film layer structure 2 can be connected between two metal conductors to implement an electrical connection between the two metal conductors. The film layer structure 2 may be bonded through a bonding layer 3. The bonding layer 3 may use at least one of high-temperature-resistant silicone adhesive, polyimide adhesive, and phenolic resin adhesive. For example, the bonding layer 3 uses epoxy adhesive, and the epoxy adhesive can withstand a temperature of 150°C, and has a water absorption rate of 0.1% to 0.5%. The bonding layer 3 can better bond the film layer structure 2 and the substrate 1, which helps improve passive intermodulation performance of the base station antenna 100.

Still refer to the conductive connector 10 shown in FIG. 3. The film layer structure 2 includes a plurality of stacked film layers, and the plurality of film layers may specifically include a flexible substrate layer 21 and at least one metal plating layer 22. The flexible substrate layer 21 wraps a surface of the substrate 1 through the bonding layer 3, that is, the flexible substrate layer 21 is a film layer closest to the substrate 1. The flexible substrate layer 21 uses polyimide film, polyethylene glycol terephthalate, or a liquid crystal polymer. A thickness of the flexible substrate layer 21 is 10 µm to 100 µm, and the flexible substrate layer 21 can withstand a temperature of at least 120°C, and has good weather resistance while ensuring good flexibility. For example, when the flexible substrate layer 21 uses polyimide film, the polyimide film can withstand a temperature of 280°C, and has a water absorption rate of 1.5% to 3%. FIG. 3 shows an example of two metal plating layers 22, and the metal plating layer 22 may exert conductivity. It may be considered that the film layer structure 2 is a special electroplating flexible film layer. When the conductive connector 10 is squeezed between two metal conductors, the two metal conductors may be electrically connected through at least one metal plating layer 22. The flexible substrate layer 21 can ensure that the film layer structure 2 can be deformed with compression of the substrate 1, and the metal plating layer 22 can be connected between two metal conductors to ensure a good and reliable electrical connection.

As shown in FIG. 4, the conductive connector 10 provided in embodiments of this application is disposed between two metal conductors 20 during application, and the two metal conductors 20 are separately in contact with the film layer structure 2, to implement an electrical connection through the film layer structure 2. The two metal conductors 20 are connected and fastened by a connecting portion 30, and the connecting portion 30 herein may be a structure such as a screw or a buckle, which facilitates assembly or disassembly of the two metal conductors 20, and can also reduce an assembly tolerance requirement of the component. A distance between the two metal conductors 20 is less than a thickness of the conductive connector 10, so that the two metal conductors 20 squeeze the conductive connector 10. Along a direction in which one metal conductor 20 points to the other metal conductor 20, the conductive connector 10 is compressed, and the substrate 1 in the conductive connector 10 generates elastic potential energy, so that the conductive connector 10 is fixedly clamped between the two metal conductors 20. That is, the conductive connector 10 is fastened by pressing and clamping other structures during application. Therefore, the conductive connector 10 may not be provided with conductive adhesive used to connect the metal conductors. However, the two metal conductors 20 may be electrically conductive directly through the film layer structure 2, without using conductive adhesive, so that the conductive adhesive can be prevented from adversely affecting passive intermodulation performance of the base station antenna 100. It should be understood that, in some application scenarios, a manner such as welding fastening, structural groove fastening, or adhesive fastening may alternatively be used between the two metal conductors 20, and a proper fastening manner may be designed according to different scenario requirements.

It should be understood that the metal plating layer 22 of the conductive connector 10 provided in embodiments of this application is formed on the flexible substrate layer 21, and is implemented based on a current technology and process. With development of technologies, the metal plating layer 22 may alternatively be directly formed on the substrate 1, and a technical effect that can be achieved by the conductive connector 10 provided in embodiments of this application can also be achieved when the flexible substrate layer 21 is omitted.

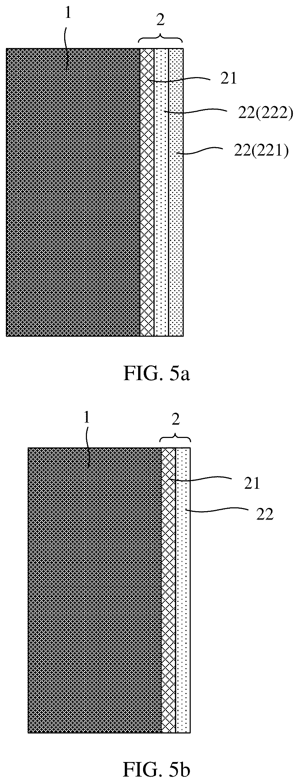

With reference to FIG. 3, FIG. 5a shows a partial structure of the film layer structure 2 and the substrate 1. The at least one metal plating layer 22 may include a surface plating layer 221 and a bottom plating layer 222. The surface plating layer 221 is a plating layer located on a surface of the entire film layer structure 2, and the bottom plating layer 222 is a plating layer in contact with the flexible substrate layer 21. The surface plating layer 221 is a silver plating layer, and a material of the silver plating layer is silver, which can maintain high conductivity. When the conductive connector 10 is used, the surface plating layer 221 is located on a surface of the structure, and the silver plating layer has better weather resistance and can adapt to a more complex and harsher environment. A material of the bottom plating layer 222 is not limited, and the bottom plating layer 222 may be a copper plating layer, a titanium plating layer, a nickel plating layer, or the like. It should be noted that, when the bottom plating layer 222 in contact with the flexible substrate layer 21 is a copper plating layer, a heterocyclic passivation solution, for example, benzotriazole, needs to be added to protect the silver plating layer.

As shown in FIG. 5b, the at least one metal plating layer 22 may include one metal plating layer 22, the metal plating layer 22 is formed on a surface of the flexible substrate layer 21, and the metal plating layer 22 is equivalent to a surface layer of the entire film layer structure 2. In this case, the metal plating layer 22 is a silver plating layer.

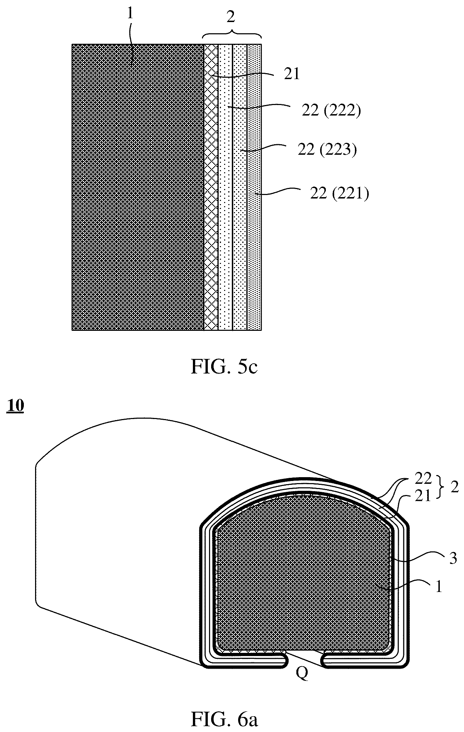

Alternatively, as shown in FIG. 5c, the at least one metal plating layer 22 includes a surface plating layer 221, a bottom plating layer 222, and an intermediate plating layer 223 located between the surface plating layer 221 and the bottom plating layer 222. The intermediate plating layer 223 may be at least one of a copper plating layer, a nickel plating layer, and a titanium plating layer. An example of one intermediate plating layer 223 is shown herein. The surface plating layer 221 is a silver plating layer, and the bottom plating layer 222 and the intermediate plating layer 223 may be a combination of any two of a copper plating layer, a titanium plating layer, and a nickel plating layer. For example, the bottom plating layer 222 is a nickel plating layer, and the intermediate plating layer 223 may be at least one of a copper plating layer and a titanium plating layer. Alternatively, the bottom plating layer 222 is a copper plating layer, and the intermediate plating layer 223 is at least one of a nickel plating layer and a titanium plating layer. Certainly, when the bottom plating layer 222 is a copper plating layer, passivation solution protection processing needs to be performed on the copper plating layer.

When the at least one metal plating layer 22 is formed, conductivity of the film layer structure 2 is further improved by combining a plurality of metal plating layers 22. The metal plating layer 22 formed on the flexible substrate layer 21 may be formed by using a physical vapor deposition (physical vapor deposition, PVD) sputtering coating process. A bonding force between the metal plating layer 22 and the flexible substrate layer 21 is greater than 5B, so that the metal plating layer 22 does not disconnect easily from the flexible substrate layer 21. When there are two or more metal plating layers 22, except for the bottom plating layer 222 formed on the flexible substrate layer 21, the other metal plating layers 22 may be formed by electroplating. After all the metal plating layers 22 are formed, a total thickness of all the metal plating layers 22 ranges from 1 µm to 10 µm. When one of the metal plating layers 22 is a nickel plating layer, a thickness of the nickel plating layer is less than 0.1 µm.

In the conductive connector 10 provided in embodiments of this application, the film layer structure 2 wraps the surface of the substrate 1 and is connected to the substrate 1 through the bonding layer 3. Specifically, the film layer structure 2 may cover most of the surface of the substrate 1. Due to material and process limitations, as shown in FIG. 6a, the film layer structure 2 may have a gap Q formed. The gap Q may be considered as a seam formed when the film layer structure 2 wraps the surface of the substrate 1. Certainly, the bonding layer 3 may be disposed only between the film layer structure 2 and the substrate 1, and there is no bonding layer 3 at the gap Q.

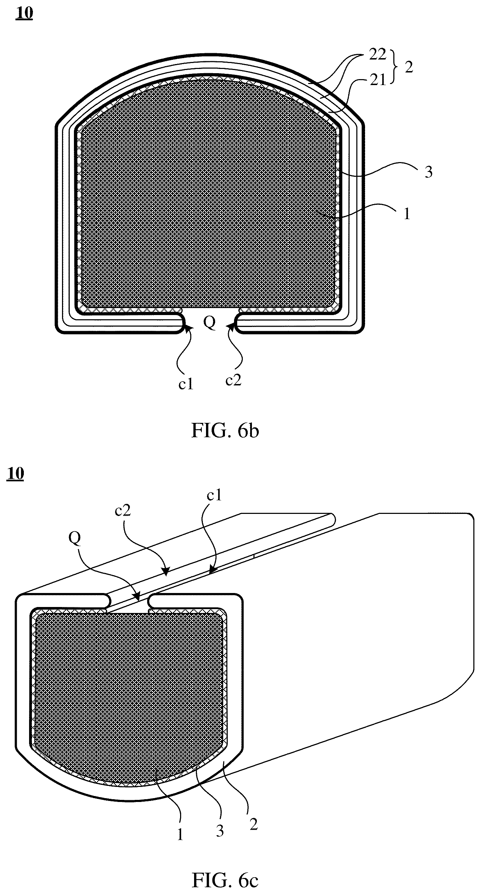

For example, with reference to the structure of the conductive connector 10 shown in FIG. 6a, FIG. 6b shows a cross-sectional structure of the conductive connector 10. The film layer structure 2 has a first side edge c1 and a second side edge c2 along a direction in which the film layer structure 2 wraps the substrate 1, that is, a direction in which the film layer structure 2 extends when wrapping the substrate 1. Further, refer to a diagram of a structure of the conductive connector 10 shown in FIG. 6c from another perspective. The gap Q is formed between the first side edge c1 and the second side edge c2, and existence of the gap Q reserves specific error space for edge abutting of the film layer structure 2. It should be understood that edges of the film layer structure 2 that abut may be considered as the first side edge c1 and the second side edge c2.

Still refer to FIG. 6c. The film layer structure 2 has a small thickness during actual application. When the thickness of the film layer structure 2 is not considered, it may be considered that the first side edge c1 and the second side edge c2 are located in a plane perpendicular to the thickness direction of the conductive connector 10.

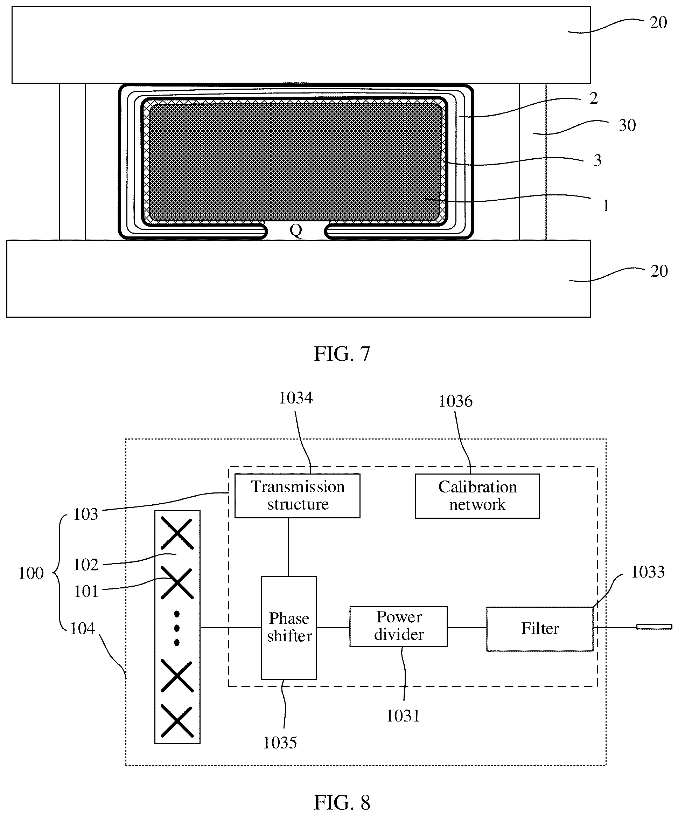

As shown in FIG. 7, when the conductive connector 10 is configured to connect two metal conductors 20, the two metal conductors 20 may be respectively in contact with two sides of the thickness direction of the conductive connector 10. The thickness direction of the conductive connector 10 may be considered as a direction in which one metal conductor 20 points to the other metal conductor 20. The gap Q is located on one side of the thickness direction of the conductive connector 10, and the plane in which the first side edge c1 and the second side edge c2 of the film layer structure 2 are located is perpendicular to the thickness direction of the conductive connector 10. It can be learned that existence of the gap Q does not affect an electrical connection implemented by the metal conductor 20 through the film layer structure 2.

In some embodiments, the substrate 1 may be conductive. Specifically, the substrate 1 may be doped with conductive particles and made conductive, and the conductive particles may include particles such as silver, aluminum, nickel, and carbon. Alternatively, the substrate 1 is an organic conductive polymer, for example, 3,4-ethylenedioxythiophene.

In conclusion, according to the conductive connector 10 provided in embodiments of this application, the substrate 1 can ensure that the conductive connector 10 has good elasticity to adapt to different position space of the base station antenna 100, and implement a reliable electrical connection through the film layer structure 2. The film layer structure 2 is a special plastic film plating structure, and can be deformed with the substrate 1. There is a high bonding force between the metal plating layer 22 and the flexible substrate layer 21, and a risk of plating layer peeling is low. Material selection of the film layer structure 2 makes the film layer structure 2 have advantages of temperature resistance and heat and humidity resistance. If a silver plating layer is selected as the surface plating layer 221, good conductivity of the film layer structure 2 can be ensured. In addition, the conductive connector 10 may be connected to a metal structure without using conductive adhesive, and material selection of the substrate 1, the film layer structure 2, and the bonding layer 3 can improve passive intermodulation performance of the base station antenna 100.

With reference to FIG. 2, FIG. 8 is a diagram of a possible internal component of the base station antenna 100 according to an embodiment of this application. As shown in FIG. 8, the base station antenna 100 may include a radome 104, and a radiating element 101, a reflection plate 102, and a feed network 103 that are disposed in the radome 104.

The radiating element 101 may also be referred to as an antenna element, an element, or the like. The radiating element 101 is a unit that constitutes a basic structure of an antenna array, and can effectively radiate or receive an antenna signal. Frequencies of different radiating elements 101 may be the same or different. The reflection plate 102 may also be referred to as a baseplate, an antenna panel, a metal reflective surface, or the like. The reflection plate 102 may reflect a received signal and focus the signal on a reception point. The radiating element 101 is usually placed on one side of the reflection plate 102. This not only can greatly enhance a signal reception or transmission capability, but also can block and shield an interference signal from a rear side of the reflection plate 102. It should be understood that, in embodiments of this application, the rear side of the reflection plate 102 is a side of the reflection plate 102 opposite to the side on which the radiating element 101 is disposed. The feed network 103 is located between the radiating element 101 and a power amplifier of the radio frequency processing unit 700. The feed network 103 may provide specific power and a specific phase for the radiating element 101. For example, the feed network 103 may include a power divider 1031 that can be used in a forward direction or a reverse direction and that is configured to divide one channel of signal into a plurality of channels of signals or combine a plurality of channels of signals into one channel of signal. Herein, the power divider 1031 may alternatively be replaced with a combiner. The feed network 103 may further include a filter 1033, configured to filter out an interference signal. For a remote electrical tilt antenna, the feed network 103 may further include a transmission component 1034 to implement different radiation beam directions, and a phase shifter 1035 to change a maximum direction of signal radiation. In some cases, the phase shifter 1035 further has a function of the power divider 1031 or the combiner. In this case, the power divider 1031 or the combiner may be omitted in the feed network 103. In some examples, the feed network 103 may further include a calibration network 1036 to obtain a required calibration signal.

Next, with reference to the structure of the base station antenna 100 shown in FIG. 2, an implementation solution in which different metal connection positions in the base station antenna 100 are connected through the conductive connector 10 is described as an example. The structures shown in FIG. 6a to FIG. 6c are used as examples of the conductive connector 10.

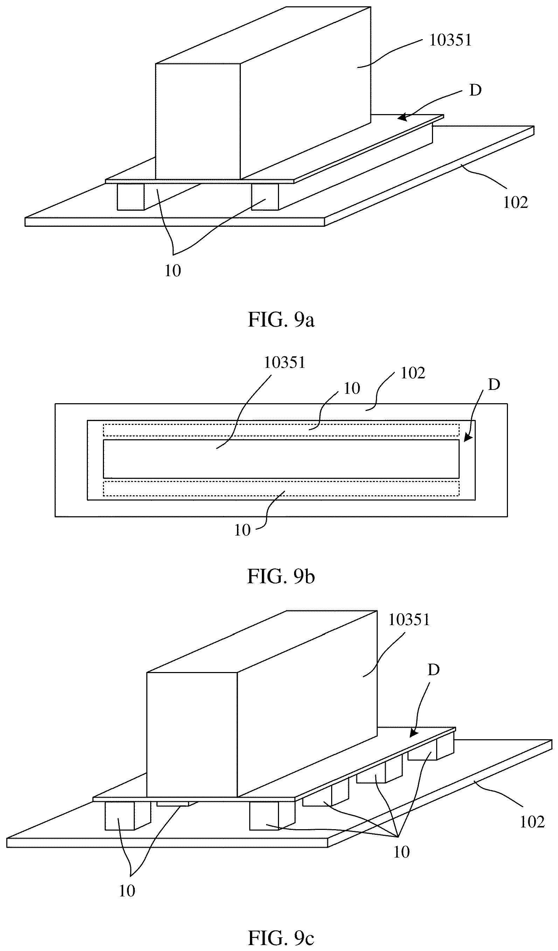

As shown in FIG. 9a, the reflection plate 102 and a phase shifter cavity 10351 in the base station antenna 100 are electrically connected through the conductive connector 10. Specifically, the reflection plate 102 and the phase shifter cavity 10351 are disposed at an interval, and the conductive connector 10 is disposed between the reflection plate 102 and the phase shifter cavity 10351. The reflection plate 102 and the phase shifter cavity 10351 are fastened to, the conductive connector 10 is squeezed by the reflection plate 102 and the phase shifter cavity 10351, and the reflection plate 102 is electrically connected to at least one metal plating layer 22 of the conductive connector 10 to implement an electrical connection. The phase shifter cavity 10351 has a ground connection D for grounding, and a part of the ground connection D or all of the ground connection D is electrically connected to the at least one metal plating layer 22 of the conductive connector 10 to implement an electrical connection. The reflection plate 102 may be connected to the phase shifter cavity 10351 by using a structure such as a screw, a pressing rod, or a buckle, and a distance between the reflection plate 102 and the phase shifter cavity 10351 also determines a compression amount of the conductive connector 10 in the thickness direction. That is, the compression amount of the conductive connector 10 in the thickness direction can be adjusted and controlled by the connector between the reflection plate 102 and the phase shifter cavity 10351. Because the conductive connector 10 is fastened by pressing the reflection plate 102 and the phase shifter cavity 10351, without using conductive adhesive, passive intermodulation performance of the base station antenna 100 can be improved. The conductive connector 10 is fastened by pressing the reflection plate 102 and the phase shifter cavity 10351, which facilitates assembly and disassembly of the reflection plate 102 and the phase shifter cavity 10351, thereby improving design flexibility of the ground connection D of the phase shifter cavity 10351, and reducing a component tolerance requirement.

FIG. 9b is a top view of the structure in FIG. 9a. Refer to FIG. 9a and FIG. 9b. The conductive connector 10 is in a long strip shape, and the conductive connector 10 extends along a length direction of the reflection plate 102, so as to implement a reliable electrical connection between the ground connection D of the phase shifter cavity 10351 and the reflection plate 102.

For example, two conductive connectors 10 are disposed between the reflection plate 102 and the phase shifter cavity 10351, and the two conductive connectors 10 are arranged approximately in parallel. In FIG. 9b, the conductive connectors 10 are located between the reflection plate 102 and the phase shifter cavity 10351 and are blocked by the ground connection D. Therefore, the conductive connectors 10 are shown by dashed lines.

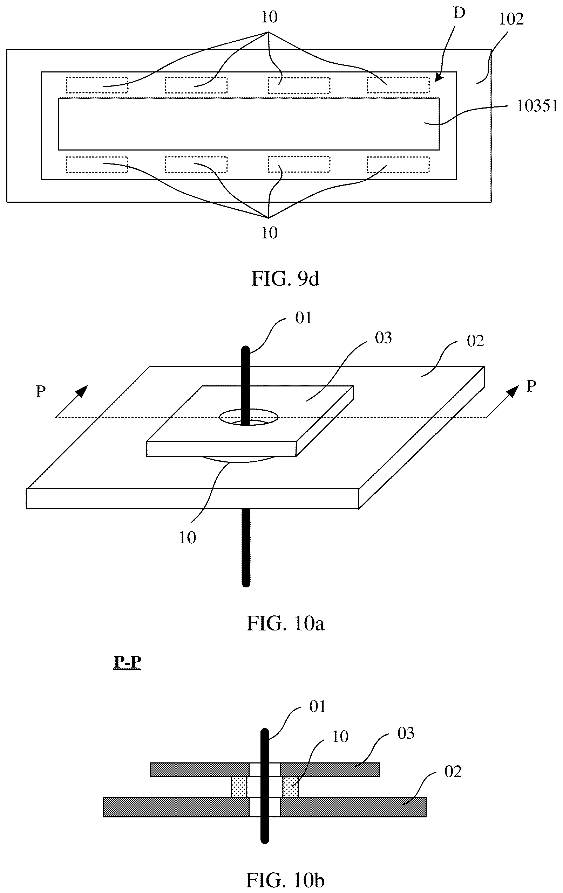

In some embodiments, as shown in FIG. 9c, the conductive connector 10 is in a block shape. A plurality of conductive connectors 10 are disposed between the reflection plate 102 and the phase shifter cavity 10351, and the plurality of conductive connectors 10 may be distributed in an array. FIG. 9d is a top view of the structure in FIG. 9c. For example, eight conductive connectors 10 are disposed between the reflection plate 102 and the phase shifter cavity 10351, and the eight conductive connectors 10 are divided into two columns and four rows. Specifically, a column direction of the plurality of conductive connectors 10 is parallel to the length direction of the reflection plate 102, and a row direction of the plurality of conductive connectors 10 is perpendicular to the length direction of the reflection plate 102. There is a specific gap between any two adjacent conductive connectors 10 in a plurality of conductive connectors 10 in a same column. For example, along the length direction of the reflection plate 102, a size of each conductive connector 10 along the length direction of the reflection plate 102 may be from 0.2 mm to 1000 mm, and a distance between any two adjacent conductive connectors 10 may be from 0.1 mm to 500 mm.

It should be understood that, with the length direction of the reflection plate 102 as a reference, the plurality of conductive connectors 10 in the same column in FIG. 9c may be considered as being formed by dividing one conductive connector 10 in FIG. 9a. It may be considered that the conductive connector 10 in FIG. 9a is continuously grounded, and the conductive connector 10 in FIG. 9c is grounded by segment.

As shown in FIG. 10a, the base station antenna 100 includes an inner conductor 01, a first outer conductor 02, and a second outer conductor 03. The inner conductor 01 is, for example, cylindrical, the first outer conductor 02 and the second outer conductor 03 are separately disposed around the inner conductor 01, and the first outer conductor 02 and the second outer conductor 03 are insulated from the inner conductor 01. The inner conductor 01 may be a feed plate of the radiating element 101 in the base station antenna 100, an inner core of a coaxial cable, an inner pin of a connector, or the like. The first outer conductor 02 and the second outer conductor 03 are two separate components, which may be balun of the radiating element 101 and the reflection plate 102 respectively, or may be the reflection plate 102 and a cavity of the filter 1033 respectively, or may be the reflection plate 102 and a cavity of a duplexer respectively. In the structure shown in FIG. 10a, the first outer conductor 02 and the second outer conductor 03 are disposed at an interval along an extension direction of the inner conductor 01, and the first outer conductor 02 and the second outer conductor 03 are connected through the conductive connector 10.

FIG. 10b is a diagram of a cross-sectional structure at P-P in FIG. 10a. The first outer conductor 02 and the second outer conductor 03 are fastened to, the conductive connector 10 is squeezed by the first outer conductor 02 and the second outer conductor 03, and the first outer conductor 02 and the second outer conductor 03 are separately electrically connected to at least one metal plating layer 22 of the conductive connector 10 to implement an electrical connection. The first outer conductor 02 and the second outer conductor 03 may be connected by using a structure such as a screw, a pressing rod, or a buckle, and a distance between the first outer conductor 02 and the second outer conductor 03 also determines a compression amount of the conductive connector 10 in the thickness direction. Because the conductive connector 10 is fastened by pressing the first outer conductor 02 and the second outer conductor 03, without using conductive adhesive, passive intermodulation performance of the base station antenna 100 can be improved. The conductive connector 10 is fastened by pressing the first outer conductor 02 and the second outer conductor 03, which facilitates assembly and disassembly of the first outer conductor 02 and the second outer conductor 03, thereby improving design flexibility of the outer conductor, and reducing a component tolerance requirement.

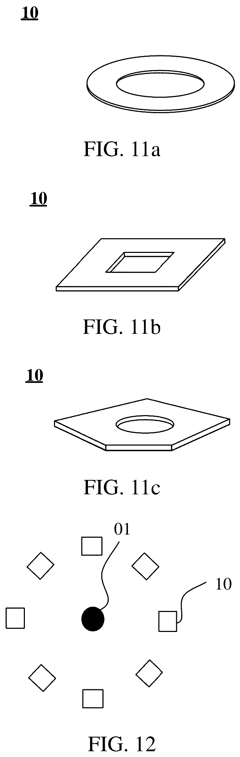

With reference to FIG. 10a and FIG. 10b, the conductive connector 10 is connected between the first outer conductor 02 and the second outer conductor 03, and the conductive connector 10 may be ring-shaped structures shown in FIG. 11a to FIG. 11c. A shape of the conductive connector 10 may be a circular ring shown in FIG. 11a, or may be a square ring shown in FIG. 11b, or may be a polygonal ring shown in FIG. 11c. Certainly, the shape of the conductive connector 10 may alternatively be an irregular ring, provided that an electrical connection between the first outer conductor 02 and the second outer conductor 03 can be implemented. A shape of an inner ring of the conductive connector 10 is not limited, provided that the conductive connector 10 is not in contact with the inner conductor 01.

In some embodiments, a plurality of conductive connectors 10 may be disposed between the first outer conductor 02 and the second outer conductor 03, and the plurality of conductive connectors 10 may be distributed around the inner conductor 01 as shown in FIG. 12, so as to electrically connect the first outer conductor 02 and the second outer conductor 03.

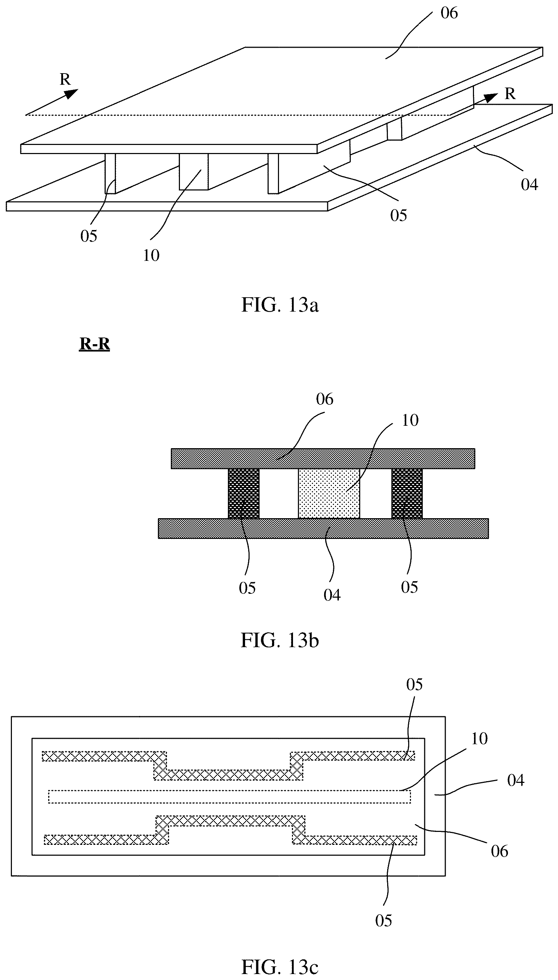

As shown in FIG. 13a, the feed network 103 of the base station antenna 100 includes a metal plate 04, feed lines 05, and a dielectric layer 06. The feed lines 05 are disposed between the metal plate 04 and the dielectric layer 06, and there are at least two feed lines 05. An example of two feed lines 05 is shown herein, and one conductive connector 10 is disposed between the two feed lines 05. With reference to a diagram of a cross-sectional structure at R-R in FIG. 13a shown in FIG. 13b, the metal plate 04 and the dielectric layer 06 are fastened to, and the conductive connector 10 is squeezed by the metal plate 04 and the dielectric layer 06. The metal plate 04 and the dielectric layer 06 may be fastened to by using a structure such as a screw, a pressing rod, or a buckle, and a distance between the metal plate 04 and the dielectric layer 06 also determines a compression amount of the conductive connector 10 in the thickness direction. Because the conductive connector 10 is fastened by pressing the metal plate 04 and the dielectric layer 06, without using conductive adhesive, passive intermodulation performance of the base station antenna 100 can be improved.

At least one of the metal plate 04 and the dielectric layer 06 is electrically connected to at least one metal plating layer 22 of the conductive connector 10. Specifically, the metal plate 04 may be electrically connected to the at least one metal plating layer 22 of the conductive connector 10, while the dielectric layer 06 has no electrical connection to the conductive connector 10. Alternatively, the dielectric layer 06 may be electrically connected to the at least one metal plating layer 22 of the conductive connector 10, while the metal plate 04 has no electrical connection to the conductive connector 10. Alternatively, the metal plate 04 and the dielectric layer 06 are separately electrically connected to the at least one metal plating layer 22 of the conductive connector 10.

FIG. 13c is a top view of FIG. 13a. The two feed lines 05 and the conductive connector 10 are blocked by the dielectric layer 06 and are shown by dashed lines. The conductive connector 10 is located between the two feed lines 05, and the conductive connector 10 is electrically connected to the metal plate 04 and/or the dielectric layer 06, so that the two feed lines 05 can be separated, thereby improving isolation between different feed lines 05. When a plurality of feed lines 05 are disposed, one conductive connector 10 may be disposed between any two adjacent feed lines 05, to improve isolation between different feed lines 05, thereby improving isolation of the base station antenna 100, and also implementing a shielding function. The different feed lines 05 may be feed lines 05 with different polarizations, or may be feed lines 05 of different radiating elements 101. The conductive connector 10 is fastened by pressing the metal plate 04 and the dielectric layer 06, which can increase a shielding and isolation design method of the base station antenna 100, and reduce a component tolerance requirement.

It should be understood that the conductive connector 10 provided in embodiments of this application may be used in a metal connection position of the base station antenna 100, or may be used in another radio frequency component. The radio frequency component may specifically include a first conductor and a second conductor, the first conductor and the second conductor are disposed at an interval, and the conductive connector 10 is disposed between the first conductor and the second conductor. The first conductor and the second conductor may be fastened to by using a structure such as a screw, a pressing rod, or a buckle or through welding fastening, structural groove fastening, or adhesive fastening. The conductive connector 10 is fastened by pressing the first conductor and the second conductor. At least one of the first conductor and the second conductor is electrically connected to at least one metal plating layer 22 of the conductive connector 10. The conductive connector 10 can improve passive intermodulation performance of the radio frequency component, and expand an application scenario of the radio frequency component. The conductive connector 10 is fastened by pressing the first conductor and the second conductor, which facilitates assembly and disassembly of the first conductor and the second conductor, thereby improving design flexibility of the radio frequency component, and reducing a component tolerance requirement. It may be considered that the base station antenna 100 is an implementation of the radio frequency component, and the radio frequency component provided in embodiments of this application may alternatively be implemented in another manner.

Clearly, a person skilled in the art can make various modifications and variations to this application without departing from the scope of this application. This application is intended to cover these modifications and variations of this application provided that they fall within the scope of protection defined by the following claims and their equivalent technologies.

## Claims

1. A conductive connector, comprising a substrate and a film layer structure, wherein
the substrate is an elastic polymer; and
the film layer structure comprises a flexible substrate layer and at least one metal plating layer, wherein the flexible substrate layer wraps a surface of the substrate, the at least one metal plating layer is sequentially stacked on a side of the flexible substrate layer away from the substrate, the at least one metal plating layer comprises a silver plating layer, and the silver plating layer is located on a surface of the film layer structure away from the substrate.

2. The conductive connector according to claim 1, wherein the at least one metal plating layer comprises a bottom plating layer, and the bottom plating layer is attached to a surface of the flexible substrate layer away from the substrate.

3. The conductive connector according to claim 2, wherein the bottom plating layer is a copper plating layer, and the copper plating layer is processed with a passivation solution.

4. The conductive connector according to claim 2 or 3, wherein the at least one metal plating layer comprises an intermediate plating layer located between the bottom plating layer and the silver plating layer.

5. The conductive connector according to claim 4, wherein the intermediate plating layer comprises at least one of a copper plating layer, a nickel plating layer, and a titanium plating layer.

6. The conductive connector according to any one of claims 1 to 5, wherein the substrate comprises at least one of silicone rubber, epichloro-hydrin rubber, ethylene propylene rubber, butyl rubber, styrene rubber, silicone foam, polyurethane foam, and acrylic foam.

7. The conductive connector according to any one of claims 1 to 6, wherein the substrate is doped with conductive particles; or the substrate is an organic conductive polymer.

8. The conductive connector according to any one of claims 1 to 7, wherein a material of the flexible substrate layer comprises any one of polyimide, polyethylene glycol terephthalate, and a liquid crystal polymer.

9. The conductive connector according to any one of claims 1 to 8, wherein the film layer structure has a first side edge and a second side edge along a direction in which the film layer structure wraps the substrate, and there is a seam between the first side edge and the second side edge.

10. A radio frequency component, comprising a first conductor, a second conductor, and at least one conductive connector according to any one of claims 1 to 9, wherein
the first conductor and the second conductor are disposed at an interval, the conductive connector is disposed between the first conductor and the second conductor, the first conductor and the second conductor are fastened to and squeeze the conductive connector, and at least one of the first conductor and the second conductor is electrically connected to at least one metal plating layer of the conductive connector.

11. A base station antenna, comprising a reflection plate, a phase shifter cavity, and the conductive connector according to any one of claims 1 to 9, wherein
the reflection plate and the phase shifter cavity are disposed at an interval, the conductive connector is disposed between the reflection plate and the phase shifter cavity, and the reflection plate and the phase shifter cavity are fastened to and squeeze the conductive connector;
the reflection plate is electrically connected to at least one metal plating layer of the conductive connector; and
the phase shifter cavity comprises a ground connection for grounding, and at least a part of the ground connection is electrically connected to the at least one metal plating layer of the conductive connector.

12. The base station antenna according to claim 11, wherein the conductive connector is in a long strip shape, and a length direction of the conductive connector is parallel to a length direction of the reflection plate.

13. The base station antenna according to claim 11 or 12, wherein there are a plurality of conductive connectors, and the plurality of conductive connectors are arranged along the length direction of the reflection plate.

14. A base station antenna, comprising an inner conductor, a first outer conductor, a second outer conductor, and the conductive connector according to any one of claims 1 to 9, wherein
the first outer conductor and the second outer conductor are separately disposed around the inner conductor, the first outer conductor and the second outer conductor are disposed at an interval, the conductive connector is disposed between the first outer conductor and the second outer conductor, the first outer conductor and the second outer conductor are fastened to and squeeze the conductive connector, and the first outer conductor and the second outer conductor are separately electrically connected to at least one metal plating layer of the conductive connector.

15. The base station antenna according to claim 14, wherein the conductive connector is in a ring shape, and the conductive connector surrounds the inner conductor.

16. A base station antenna, comprising a metal plate, at least two feed lines, a dielectric layer, and the conductive connector according to any one of claims 1 to 9, wherein
both the at least two feed lines and the conductive connector are disposed between the metal plate and the dielectric layer, one conductive connector is disposed between at least two adjacent feed lines, the metal plate and the dielectric layer are fastened to and squeeze the conductive connector, and at least one of the metal plate and the dielectric layer is electrically connected to at least one metal plating layer of the conductive connector.

17. A base station, comprising a pole, a baseband processing unit, and the base station antenna according to any one of claims 11 to 16, wherein the base station antenna is fastened to the pole, and the base station antenna is electrically connected to the baseband processing unit.
